# EUROPÄISCHE PATENTANMELDUNG

(11) **EP 0 909 782 A2**
(43) Veröffentlichungstag der Anmeldung: **21.04.1999**
(21) Anmeldenummer: 98118848.5
(22) Anmeldetag: 06.10.1998
(51) Int. Cl.: C08J 9/12, C08J 9/00, C08L 25/04

(54) **Unter Verwendung halogenfreier Treibmittel hergestellte Styrolschaumstoffplatten**

(30) Priorität: 21.10.1997 DE 19746364
(71) Anmelder: BASF AKTIENGESELLSCHAFT, 67056 Ludwigshafen (DE)
(72) Erfinder: Hahn, Klaus Dr., 67281 Kirchheim (DE); Alicke, Gerhard, 67549 Worms (DE); Turznik, Gerhard Dr., 67269 Grünstadt (DE); Loth, Wolfgang Dr., 67098 Bad Dürkheim (DE); Weber, Reinhold, 67112 Mutterstadt (DE); Ehrmann, Gerd Dr., 67146 Deidesheim (DE); Dietzen, Franz-Josef Dr., 67071 Ludwigshafen (DE)

(57) **Zusammenfassung**

Die Erfindung betrifft unter Verwendung halogenfreier Treibmittel hergestellte, extrudierte Schaumstoffplatten aus einer Polystyrol-Thermoplastmatrix und geschlossenen Zellen, die frei von halogenhaltigen Gasen sind. Das Polystyrol der Thermoplastmatrix weist eine mindestens bimodale Molekulargewichtsverteilung auf, wobei 1 bis 15 Gew.-% der Thermoplastmatrix anionisch hergestelltes Polystyrol mit einem Molekulargewicht von mindestens 800.000 g/mol sind. Die Platten sind mindestens 20 mm, vorzugsweise mehr als 50 mm und insbesondere 80 bis 200 mm dick. Bevorzugte Treibmittel zur Herstellung der Schaumstoffplatten sind Kohlendioxid allein, sowie Mischungen aus Kohlendioxid und Ethanol und/oder Dimethylether.

## Beschreibung

Die Erfindung betrifft unter Verwendung halogenfreier Treibmittel hergestellte Schaumstoffplatten und Verfahren zu ihrer Herstellung. Die Erfindung betrifft insbesondere solche Schaumstoffplatten, die eine Dicke von mindestens 20 mm aufweisen und eine Thermoplastmatrix auf Basis von Polystyrol sowie geschlossene Zellen, die frei von halogenhaltigen Gasen sind, enthalten.

Für die Herstellung von Schaumstoffplatten auf Basis von Styrolpolymerisaten durch Extrusion ist eine Vielzahl von halogenfreien Treibmitteln vorgeschlagen worden.

Beispielsweise ist aus der EP-A-464 581 ein Verfahren zur Herstellung von Schaumstoffplatten mit hoher Druckfestigkeit und einem Querschnitt von mindestens 50 cm² bekannt, bei dem ein Gemisch aus einem Styrolpolymerisat, 5 bis 16 Gew.-%, bezogen auf das Styrolpolymerisat, eines Treibmittels, sowie gegebenenfalls üblichen Zusatzstoffen, extrudiert wird, wobei als Treibmittel ein Gemisch verwendet wird, welches enthält
- a) 3 bis 70 Gew.-%: eines Alkohols oder Ketons mit einen Siedepunkt zwischen 56 und 100°C,
- b) 5 bis 50 Gew.-%: Kohlendioxid und
- c) 0 bis 90 Gew.-%: eines gesättigten C₃- bis C₅-Kohlenwasserstoffs.

Bei Verwendung von schnell aus dem Schaum diffundierenden Treibmitteln, z.B. CO₂ und Verwendung eines üblichen Polystyrols mit Molekulargewichten zwischen 150 000 und 400.000 g/mol, ist eine ausreichende Dimensionsstabilität und Druckfestigkeit von Schaumstoffplatten mit einer Plattendicke von 20 mm oder mehr, insbesondere gleich oder größer 50 mm, häufig nicht mehr gewährleistet. Darüber hinaus werden bei Verwendung von Treibmitteln mit hoher Triebkraft Schaumstoffe mit hohem Anteil an offenen Zellen erhalten, und es ist schwierig, niedrige Dichten zu erreichen. Schließlich muß vor der Extruderdüse ein ausreichend hoher Druck herrschen, um ein Vorschäumen in der Düse zu verhindern, was zu einem Aufreißen der Schaumoberfläche führen würde. Dieses Einhalten eines hohen Drucks ist aber bei Verwendung von anorganischen Gasen als Treibmittel schwierig, was zur Folge hat, daß nur geringe Durchsätze erreicht werden. Insofern wäre es günstig, eine Thermoplastmatrix einsetzen zu können, die das Einstellen hoher Düsendrücke erlaubt.

Die WO 94/28 058 beschreibt extrudierte Schaumstoffplatten, die mit halogenfreien Treibmitteln aus Styrolpolymerisaten mit niedriger Vicat-Erweichungstemperatur und hohem Schmelzindex hergestellt werden. Die verhältnismäßig niedrige Erweichungstemperatur führt dazu, daß auch die Druckfestigkeit des Schaumstoffplatten bei erhöhtem Temperaturen verringert ist.

Die europäische Patentanmeldung 97 105 879.2 betrifft extrudierte Schaumstoffplatten auf Basis von Polystyrol mit einem mittleren Molekulargewicht von 175.000 bis 500.000 und einer Uneinheitlichkeit M_{w}:Mₙ von größer als 2,6. Die Thermoplastmatrix kann auch eine Mischung von zwei Polystyroltypen mit unterschiedlichem Molekulargewicht sein.

Die Aufgabe der Erfindung bestand darin, unter Verwendung halogenfreier Treibmittel hergestellte extrudierte Schaumstoffplatten auf der Basis von Styrolpolymerisaten bereitzustellen.

Aufgabe der Erfindung war außerdem, ein Verfahren zur Herstellung von Schaumstoffplatten aus Styrolpolymerisaten mit einer Mindestdicke von 20 mm aufzuzeigen, das zu Schaumstoffen mit geschlossenen Zellen führt, die neben guter Dimensionsstabilität und Druckfestigkeit niedrige Dichten aufweisen. Ein weiteres Ziel der Erfindung war die Herstellung von Schaumstoffplatten einer Dicke von mehr als 50 mm, vorzugsweise von 80 bis 200 mm bei Verwendung von Treibmittelgemischen aus Ethanol und Kohlendioxid und insbesondere von Kohlendioxid als alleinigem Treibmittel.

Gegenstand der Erfindung sind unter Verwendung halogenfreier Treibmittel hergestellte, extrudierte Schaumstoffplatten mit einer Mindestdicke von 20 mm, enthaltend eine Thermoplastmatrix auf Basis von Polystyrol mit mindestens bimodaler Molekulargewichtsverteilung und geschlossene Zellen, die frei von halogenhaltigen Gasen sind, wobei die Thermoplastmatrix 1 bis 15 Gew.-% anionisch hergestelltes Polystyrol mit einem Molekulargewicht von mindestens 800.000 g/mol sind.

Ein weiterer Gegenstand der Erfindung ist ein Verfahren zur Herstellung solcher Schaumstoffplatten durch Extrusion eines Gemisches der plastifizierten Thermoplastmatrix mit 1 bis 15 Gew.-% eines halogenfreien Treibmittels sowie gegebenenfalls üblichen Zusatzstoffe.

Der Kern der Erfindung besteht darin, daß das Polystyrol der Thermoplastmatrix eine mindestens bimodale Molekulargewichtsverteilung aufweist und 1 bis 15, vorzugsweise 2 bis 10 Gew.-% des Polystyrols ein Molekulargewicht von mindestens 800.000 g/mol hat und durch anionische Polymerisation hergestellt wurde.

In der Patentanmeldung WO 96/18 663 ist ein Polystyrol mit bimodaler Molekulargewichtsverteilung beschrieben, welches durch radikalische Polymerisation in Gegenwart von Schwefel- oder Phosphor enthaltenden ungesättigten Säuren hergestellt wird. Das Polystyrol kann u.a. auch zur Herstellung von Schaumstoffplatten eingesetzt werden, wobei aber über die dabei zu verwendenden Treibmittel nichts ausgesagt ist. Es wird noch ausgeführt, daß sehr hochmolekulares Polystyrol gewöhnlich mit Hilfe lithiumorganischer Initiatoren hergestellt wird, was aber verfärbte Produkte ergeben soll. Andererseits bewirken die genannten sauren Katalysatoren aber, daß entsprechende Schaumstoffe zur Wasseraufnahme neigen.

Bei einer bevorzugten Ausführungsform der Erfindung enthält die Thermoplastmatrix
- A. 40 bis 90,: vorzugsweise 50 bis 80 Gew.-% radikalisch polymerisiertes Polystyrol mit einem Molekulargewicht von höchstens 500.000, insbesondere von 150.000 bis 400.000 g/mol und
- B. 60 bis 10,: vorzugsweise 50 bis 20 Gew.-% anionisch polymerisiertes Polystyrol mit bimodaler Molekulargewichtsverteilung.

Dieses anionisch polymerisierte Polystyrol B enthält vorzugsweise
- 5 bis 50,: insbesondere 10 bis 30 Gew.-% Polystyrol mit einem Molekulargewicht von mindestens 800.000, insbesondere 1.000.000 bis 5.000.000 g/mol und
- 95 bis 50,: insbesondere 90 bis 70 Gew.-% Polystyrol mit einem Molekulargewicht von höchstens 500.000, insbesondere von 100.000 bis 400.000 g/mol.

Das anionisch polymerisierte Polystyrol B ist ausführlich beschrieben in der Deutschen Patentanmeldung P 19 738 082.4. Es wird hergestellt durch Polymerisation von Styrol mit lithiumorganischen Initiatoren in Kohlenwasserstoff-Lösungsmitteln mit mindestens zweimaliger Initiatordosierung, wobei bei der ersten Dosierung einer geringen Menge Initiator das ultrahochmolekulare Polystyrol entsteht und bei der zweiten Dosierung einer größeren Menge Initiator das Polystyrol mit dem niedrigeren Molekulargewicht.

Die Gew.%-Angaben für die Molekulargewichte entsprechen den Flächenanteilen der jeweiligen Molekulargewichtsbereiche in der Molmassenverteilungsdarstellung. Unter Molmassenverteilungsdarstellung versteht man die nach Kalibrierung erhaltene Verteilungskurve der aus der Gelpermeationschromatographie erhaltenen Retentionszeiten.

Das Polystyrol A wird durch übliche Polymerisation von Styrol mit Hilfe von in Radikale zerfallenden Initiatoren in Substanz, Lösung oder wäßriger Suspension hergestellt. Neben Styrol können auch untergeordnete Mengen, vorzugsweise weniger als 20, insbesondere weniger als 10 Gew.-% üblicher Comonomerer copolymerisiert werden.

Das Vermischen der Polystyrole A und B erfolgt vorzugsweise dadurch, daß man entsprechende Granulate vormischt und in einem Extruder aufschmiltz und mittels spezieller Mischelemente homogenisiert. Man kann die Granulate auch getrennt aufschmelzen und dann in einem Extruder vermischen.

Die erfindungsgemäßen Schaumstoffplatten sind mindestens 20 mm dick, vorzugsweise mehr als 50 mm und insbesondere 80 bis 200 mm. Der Querschnitt beträgt mindestens 50 cm², vorzugsweise 100 bis 2000 cm². Sie sind geschlossenzellig, d.h., mehr als 90 %, vorzugsweise mehr als 95 % der Zellen sind geschlossen, was eine geringe Wasseraufnahme zur Folge hat. Die Dichte der Schaumstoffplatten beträgt vorzugsweise 20 bis 60 g·l⁻¹.

Die Herstellung der Schaumstoffplatten erfolgt in an sich bekannter Weise durch Extrusion. In einem Extruder wird die durch Erwärmen plastifizierte Thermoplastmatrix mit dem Treibmittel oder Treibmittelgemisch und gegebenenfalls weiteren Zusatzstoffen innig vermischt. Das Gemisch durchläuft sodann eine Beruhigungszone, in der es unter ständigem Rühren auf eine Temperatur zwischen etwa 100 und 120°C gekühlt und anschließend durch eine Düse zu Platten extrudiert wird.

Als übliche Zusatz- und/oder Hilfsstoffe können der Thermoplastmatrix Antistatika, Stabilisatoren, Farbstoffe, Füllstoffe, Flammschutzmittel und/oder Keimbildner in üblichen Mengen zugesetzt werden.

Beim erfindungsgemäßen Verfahren wird das Treibmittel oder Treibmittel-Gemisch in einer Menge von 1 bis 15 Gew.-% , vorzugsweise 3 bis 11 Gew.-%, insbesondere 4 bis 8 Gew.-%, bezogen auf die Thermoplastmatrix, verwendet. Die Treibmittel sind halogenfreie, flüchtige Substanzen.

Bevorzugt ist eine Treibmittelmischung aus
- a) 10 bis 100 Gew.-%: Kohlendioxid,
- b) bis zu 90 Gew.-%: eines Ethers aus der Gruppe Dimethylether, Methylethylether und Methylvinylether,
- c) bis zu 80 Gew.-%: eines Alkohols oder Ketons mit einem Siedepunkt zwischen 56 und 100°C, und
- d) bis zu 30 Gew.-%: eines aliphatischen C₃-C₆-Kohlenwasserstoffs.

Eine besonders bevorzugte Treibmittelmischung sind Mischungen aus
a) 40 bis 80, vorzugsweise 30 bis 70 Gew.-% Kohlendioxid,
c) 60 bis 20, vorzugsweise 70 bis 30 Gew.-% Ethanol,
d) 0 bis 10 Gew.-% eines aliphatischen C₃-C₆-Kohlenwasserstoffs.

Andere bevorzugte Treibmittelmischungen enthaltend:
- a) 20 bis 90 Gew.-%: Kohlendioxid,
- b) 5 bis 30 Gew.-%: Dimethylether,
- c) 0 bis 40 Gew.-%: Ethanol, und
- d) bis zu 10 Gew.-%: eines aliphatischen C₃-C₆-Kohlenwasserstoffs.

Schließlich können außer Kohlendioxid auch andere anorganische Gase, wie Stickstoff, Argon oder Ammoniak, gegebenenfalls im Gemisch mit halogenfreien organischen Treibmitteln eingesetzt werden.

Die in den Beispielen genannten Teile und Prozente beziehen sich auf das Gewicht.

### Beispiel 1

100 Teile verschiedenartiger Polystyroltypen werden einem Extruder mit einem mittleren Schneckendurchmesser von 53 mm kontinuierlich zugeführt und aufgeschmolzen. Durch eine Einlaßöffnung wurde ein Treibmittelgemisch aus 3,5 Teilen CO₂ und 3,25 Teilen Ethanol kontinuierlich eingedrückt und in die Schmelze eingemischt.

Das im Extruder gleichmäßig geknetete Schmelze-Treibmittelgemisch wurde dann einem zweiten Extruder mit einem Schneckendurchmesser von 90 mm zugeführt und dort während einer Verweilzeit von etwa 10 min auf die zu Schäumen günstige Temperatur vom 110°C abgekühlt. Die gekühlte Schmelze wurde sodann durch eine Schlitzdüse von 70 mm x 2,0 mm in die Atmosphäre extrudiert.

Tabelle 1 zeigt die eingesetzten Polystyroltypen, den höchstmöglichen Druck an der Düse (ohne daß die Schäumhaut aufreißt) sowie die Dimension und Dichte der entstandenen Schaumstoffplatten.

**Tabelle 1**

| Polystyrol | | Druck (bar) | Breite mm | Höhe mm | Dichte g/l |
|---|---|---|---|---|---|
| a. 100 Teile A | | 63 | 171 | 51 | 57,5 |
| b. | 70 Teile A | 91 | 238 | 56 | 53,3 |
| | 30 Teile B | | | | |

Polystyrol A ist ein radikalisch polymerisiertes Polystyrol mit einem mittleren Molekulargewicht von M_{w} = 195.000 (Polystyrol 138 F der BASF AG).

Polystyrol B ist ein anionisch polymerisiertes Polystyrol, hergestellt nach Beispiel 1 der Deutschen Patentanmeldung P 19 738 082.4 mit einem Gehalt von 16,3 % Polymer mit Molekulargewicht von mehr als 1.000.000 g/mol.

### Beispiel 2

Es wurde gearbeitet wie in Beispiel 1, wobei aber als Treibmittel 4,25 Teile CO₂ eingesetzt wurden. Die Temperatur im 2. Extruder betrug 130°C. Ergebnisse siehe Tabelle 2.

**Tabelle 2**

| Polystyrol | | Druck (bar) | Breite mm | Höhe mm | Dichte g/l |
|---|---|---|---|---|---|
| a. 100 Teile A | | 97 | 133 | 57 | 51,0 |
| b. | 70 Teile A | 118 | 172 | 63 | 49,5 |
| | 30 Teile B | | | | |

### Beispiel 3b

Es wurde gearbeitet wie in Beispiel 2, wobei aber die Spaltweite der Schlitzdüse im 2. Extruder 1,5 mm betrug. Bei einem Druck an der Düse von 143 bar wurden Schaumstoffplatten mit einer Dichte von 43 g/l erhalten.

## Patentansprüche

1. Unter Verwendung halogenfreier Treibmittel hergestellte, extrudierte Schaumstoffplatten mit einer Mindestdicke von 20 mm, enthaltend eine Thermoplastmatrix aus Polystyrol mit mindestens bimodaler Molekulargewichtsverteilung und geschlossene Zellen, die frei von halogenhaltigen Gasen sind, dadurch gekennzeichnet, daß 1 bis 15 Gew.-% der Thermoplastmatrix anionisch hergestelltes Polystyrol mit einem Molekulargewicht von mindestens 800.000 g/mol sind.

2. Schaumstoffplatten nach Anspruch 1, dadurch gekennzeichnet, daß ihre Dicke mehr als 50 mm, vorzugsweise 80 bis 200 mm beträgt.

3. Schaumstoffplatten nach Anspruch 1, dadurch gekennzeichnet, daß mehr als 90 %, vorzugsweise mehr als 95 % ihrer Zellen geschlossen sind.

4. Schaumstoffplatten nach Anspruch 1, dadurch gekennzeichnet, daß das Polystyrol mit Molekulargewicht von mindestens 800.000 g/mol mit lithiumorganischen Initiatoren hergestellt wurde.

5. Schaumstoffplatten nach Anspruch 4, dadurch gekennzeichnet, daß die Thermoplastmatrix enthält
A. 40 - 90 Gew.-% radikalisch polymerisiertes Polystyrol mit einem Molekulargewicht von höchstens 500.000 g/mol und
B. 60 - 10 Gew.-% anionisch polymerisiertes Polystyrol mit bimodaler Molekulargewichtsverteilung.

6. Schaumstoffplatten nach Anspruch 5, dadurch gekennzeichnet, daß das anionisch polymerisierte Polystyrol B enthält
5 - 50 Gew.-% Polystyrol mit Molekulargewicht von mindestens 800.000 g/mol und
95 - 50 Gew.-% Polystyrol mit Molekulargewicht von höchstens 500.000 g/mol.

7. Schaumstoffplatten nach Anspruch 6, dadurch gekennzeichnet, daß das anionisch polymerisierte Polystyrol B hergestellt wurde durch Polymerisation von Styrol mit lithiumorganischen Initiatoren in Kohlenwasserstoff-Lösungsmitteln mit mindestens zweimaliger Initiatordosierung.

8. Verfahren zur Herstellung der Schaumstoffplatten nach Anspruch 1 durch Extrusion eines Gemisches der plastifizierten Thermoplastmatrix mit 1 bis 15 Gew.-% eines halogenfreien Treibmittels sowie gegebenenfalls üblichen Zusatzstoffen.

9. Verfahren nach Anspruch 4, dadurch gekennzeichnet, daß als Treibmittel eine Mischung aus
a) 10 bis 100 Gew.-% Kohlendioxid,
b) bis zu 90 Gew.-% eines Ethers aus der Gruppe Dimethylether, Methylethylether und Methylvinylether,
c) bis zu 90 Gew.-% eines Alkohols oder Ketons mit einem Siedepunkt zwischen 56 und 100°C, und
d) bis zu 30 Gew.-% eines aliphatischen C₃-C₆-Kohlenwasserstoffs
verwendet wird.

10. Verfahren nach Anspruch 4, dadurch gekennzeichnet, daß als Treibmittel eine Mischung aus
a) 40 bis 80 Gew.-% Kohlendioxid,
c) 60 bis 20 Gew.-% Ethanol und
d) 0 bis 10 Gew.-% eines aliphatischen C₃-C₆-Kohlenwasserstoffs
verwendet wird.

11. Verfahren nach Anspruch 4, dadurch gekennzeichnet, daß als Treibmittel eine Mischung aus
a) 2 bis 90 Gew.-% Kohlendioxid,
b) 5 bis 30 Gew.-% Dimethylether,
c) 0 bis 60 Gew.-% Ethanol, und
d) bis zu 10 Gew.-% eines aliphatischen C₃-C₆-Kohlenwasserstoffs
verwendet wird.

12. Verfahren nach Anspruch 4, dadurch gekennzeichnet, daß als Treibmittel ausschließlich Kohlendioxid verwendet wird.
